# EUROPÄISCHE PATENTANMELDUNG

(11) **EP 3 536 451 A1**
(43) Veröffentlichungstag der Anmeldung: **11.09.2019**
(21) Anmeldenummer: 18160471.1
(22) Anmeldetag: 07.03.2018
(51) Int. Cl.: B24B 41/06, B23B 31/117, B23B 31/40

(54) **VERFAHREN UND VORRICHTUNG ZUR VERBESSERUNG DER KOAXIALITÄT UND BELASTBARKEIT EINER AUS EINER RINGFÖRMIG GESCHLOSSENEN AUFNAHME UND EINER AUFWEIT- BZW. ZUSAMMENDRÜCKBAREN HÜLSE BESTEHENDEN KEGELVERBINDUNG**

(71) Anmelder: Knäbel, Horst, 40667 Meerbusch (DE)
(72) Erfinder: Knäbel, Horst, 40667 Meerbusch (DE)
(74) Vertreter: KNH Patentanwälte Neumann Heine Taruttis PartG mbB

(57) **Zusammenfassung**

Verfahren und Vorrichtung zur Verbesserung der Koaxialität und Belastbarkeit einer aus einer Aufnahme und einer aufweit- bzw. zusammendrückbaren Hülse bestehenden Kegelverbindung, indem die Radien des äußeren Kegels stets gleich oder größer den Radien des inneren Kegels ausgeführt werden.

## Beschreibung

Die vorliegende Erfindung betrifft ein Verfahren zur Verbesserung der Koaxialität und Belastbarkeit einer aus einer Aufnahme und einer aufweit- bzw. zusammendrückbaren Hülse bestehenden Kegelverbindung sowie eine Vorrichtung zur Durchführung des Verfahrens.

Insbesondere in der Spanntechnik gibt es zahlreiche Kegelverbindungen bei denen eine radial aufweitbare Hülse auf einen Aufnahmedorn gedrückt wird, um den äußeren Durchmesser der Hülse zu vergrößern und so ein auf die Hülse aufgesetztes Werkstück oder Werkzeug zu fixieren und kraftschlüssig zu spannen, oder bei denen eine radial zusammendrückbare Hülse in die kegelförmige Bohrung einer Aufnahmehülse gedrückt wird, um den Durchmesser der Hülsenbohrung zu reduzieren und so ein in die Hülse eingeführtes Werkstück oder Werkzeug zu fixieren und kraftschlüssig zu spannen.

In der nachfolgenden Beschreibung werden die Begriffe Aufnahmedorn und Aufnahmehülse unter der Bezeichnung Aufnahme zusammengefasst. Und da mit einer solchen Einrichtung in gleicher Weise Werkstücke wie auch Werkzeuge fixiert und gespannt werden können, werden nachfolgend diese Begriffe zur Bezeichnung Werkstück verschmolzen.

Eine solche Hülse kann ein rotationssymmetrisches, mit Längsschlitzen versehenes Spannelement, ein aus Stahlsegmenten und aufvulkanisierten Gummizwischenlagen zusammengefügtes Spannelement oder ein aus Tragstegen mit elastischen Zwischengliedern bestehendes Spannelement sein. Durch die Schlitze, Gummizwischenlagen und elastischen Zwischenglieder wird die Hülse in Stege aufgeteilt, über die Spannkraft von der Aufnahme an das Werkstück übertragen wird.

Aufgrund der axialen Aufeinanderzubewegung von Hülse und Aufnahme beim Spannen treffen kegelförmige Flächen mit unterschiedlichen Radien aufeinander, so dass sich die Spannkraft vom Zentrum der Stege auf deren Randzonen hin verlagert und zwischen dem Zentrum der einzelnen Stege und der ihnen gegenüberliegenden Wandung der Aufnahme einen Spalt entstehen lässt, der mit zunehmender Aufeinanderzubewegung von Hülse und Aufnahme überproportional ansteigt.

Infolge dessen kommt es zu einem unkontrollierbaren Anstieg der Flächenbelastung im Bereich der weniger präzis gefertigten Stegkanten. Dies wiederum führt zur Deformation und zum Verschleiß der Stegkanten und demzufolge zu einer unkontrollierbaren und zunehmenden Verschlechterung der Koaxialität zwischen der Aufnahme und dem Werkstück. Dieser Effekt wird noch verstärkt, wenn es sich dabei um eine Spanneinrichtung handelt, die fortwährend geöffnet und geschlossen werden muss.

Der vorliegenden Erfindung liegt deshalb die Aufgabe zugrunde, ein Verfahren zu entwickeln mit dem es möglich ist, die Koaxialität zu verbessern, die Verbesserung unabhängig vom Spannbereich zu machen, die spezifische Flächenpressung zu mindern und damit den Verschleiß deutlich zu reduzieren.

Zur Lösung dieser Aufgabe wird gemäß der Erfindung bei einer Kegelverbindung gemäß der eingangs beschriebenen Gattung vorgeschlagen, dass die Radien eines äußeren Kegels stets gleich oder größer den Radien eines inneren Kegels der Kegelverbindung ausgeführt werden.

Weitere Merkmale dieser Erfindung sind in den abhängigen Ansprüchen offenbart.

Der äußere Kegel wird auf einer Werkzeugmaschine, insbesondere einem Schleifgerät, vorzugsweise einer Innenschleifeinrichtung, bearbeitet, deren radiale Zustellung von einer synchron zur Werkstückdrehzahl und Stegfolge verlaufende Zusatzbewegung überlagert ist.

Nach einer Weiterbildung des Verfahrens weist die Zusatzbewegung einen sinusförmigen Verlauf auf. Hierbei ist die Amplitude der Zusatzbewegung über den Radius und den in Anspruch genommenen Winkel des Grundkreises variierbar.

Vorzugsweise wird die Zusatzbewegung als Stellsignal an die Maschinensteuerung übertragen. Die Zusatzbewegung wird vorzugsweise über einen separaten, direkt mit dem Schleifgerät gekoppelten Stellantrieb übertragen, wobei der Stellantrieb fest mit der radialen Zustellung des Schleifgeräts verbundenen ist.

Die erfindungsgemäße Vorrichtung zur Durchführung des Verfahrens nach Anspruch weist eine Werkzeugmaschine, insbesondere einem Schleifgerät, vorzugsweise einer Innenschleifeinrichtung, und einen Stellantrieb auf, wobei der Stellantrieb, insbesondere ein separater Stellantrieb, als Piezoaktor ausgeführt und über seine Ansteuerung synchron mit der Maschinensteuerung verbunden ist.

Nach einem weiteren erfinderischen Gedanken wird eine Vorrichtung zur Durchführung des Verfahrens nach Anspruch 1 bis 5 umfassend eine Werkzeugmaschine, insbesondere einem Schleifgerät, vorzugsweise einer Innenschleifeinrichtung, und einen Stellantrieb vorgeschlagen, wobei der Stellantrieb, insbesondere der separate Stellantrieb, als mechanischer mit dem Werkstückantrieb gekoppelter Mechanismus ausgeführt ist.

Die Erfindung sowie weitere Vorteile derselben werden nachfolgend anhand der Zeichnungen in den Figuren 1 bis 7 näher erläutert.

Dabei zeigen:
- Fig. 1: eine Schnittansicht einer Kegelverbindung als Spanneinrichtung für ein Werkstück, das über seine Bohrung fixiert wird.
- Fig. 2: einen vergrößerten Ausschnitt des Bereichs A der Fig. 1
- Fig. 3: einen vergrößerten Ausschnitt des Bereichs B der Fig. 1
- Fig. 4: eine Schnittansicht einer Kegelverbindung als Spanneinrichtung für ein Werkstück, das über seinen Außendurchmesser fixiert wird.
- Fig. 5: einen vergrößerten Ausschnitt des Bereichs C der Fig. 4
- Fig. 6: einen vergrößerten Ausschnitt des Bereichs D der Fig. 4
- Fig. 7: eine Prinzipdarstellung der Bearbeitung einer kegelförmigen Hülsen- oder Aufnahme-Bohrung auf einer Innenschleifmaschine.

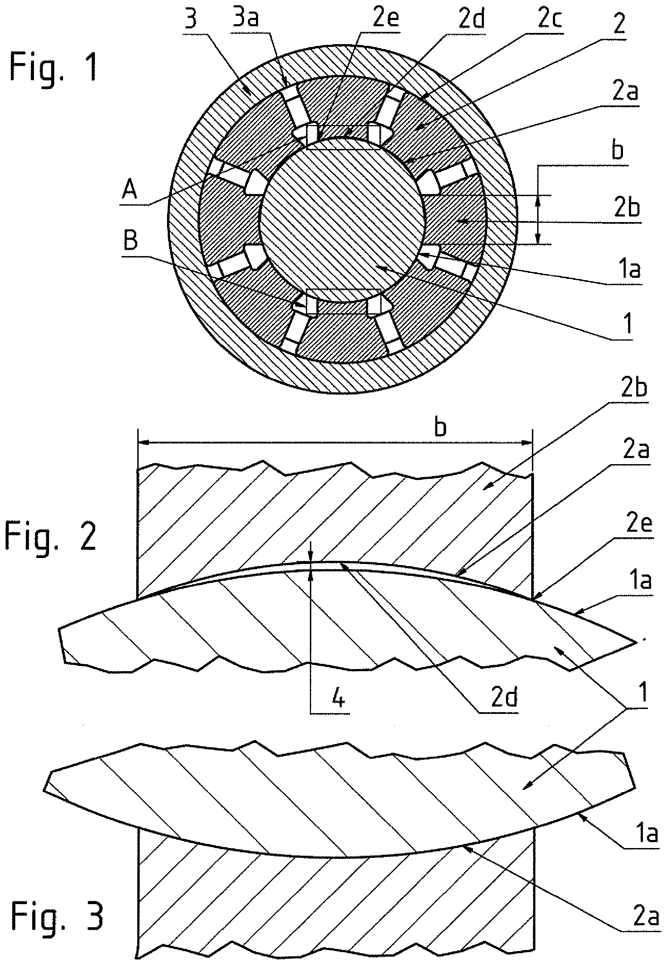

Die in Figur 1 dargestellte Kegelverbindung umfasst eine Aufnahme 1, die hier als kegelförmiger Dorn ausgebildet ist und eine Hülse 2, die sich mit ihrer kegelförmigen Bohrung 2a über ihre Stege 2b auf der Aufnahme 1 abstützt, während ihr zylindrischer Außendurchmesser 2c in die Bohrung 3a eines zu fixierenden oder zu spannenden Werkstücks 3 ragt.

Entsprechend der Aufgabe einer Kegelverbindung sollen die vorerst lose zusammengefügten Teile in einem sogenannten Spannvorgang kraftschlüssig mit einander verbunden werden.

Dies geschieht in dem die Hülse 2 und/oder die Aufnahme 1 zueinander axial verschoben werden, so dass hierbei die Hülse 2 mit ihrer kegelförmigen Bohrung 2a über ihre Stege 2b auf eine kegelförmige, äußere Mantelfläche 1a der Aufnahme 1 trifft und so weit aufgeweitet wird, bis der Kraftschluss über ihren zylindrischen Außendurchmesser 2c zum Werkstück 3 hergestellt ist.

Das heißt, dass die aufweitbare Hülse 2 mit ihrem kleineren Kegel auf den größeren Kegel der Aufnahme 1 gedrückt wird. Demzufolge kommt es zur Berührung unterschiedlicher Radien, so dass sich der Kraftschluss vom Zentrum 2d der Stege 2b auf deren Randzonen 2e hin verlagert, so wie dies in der oberen Hälfte der Figur 1 und vergrößert in Figur 2 dargestellt ist. Auf diese Weise entsteht ein Spalt 4 zwischen den Stegen 2b der Hülse 2, der sich entsprechend der gegebenen Stegbreite b mit zunehmender Aufweitung der Hülse 2 überproportional vergrößert.

Durch die Kraftschlussverlagerung kommt es aber auch zu einem starken Anstieg der spezifischen Flächenbelastung in den Randzonen 2e der Stege 2b und damit auch zu einer unkontrollierbaren Koaxialitätsabweichung zwischen der Aufnahme 1 und der Hülse 2, die sich negativ auf den Rundlauf des Werkstücks 3 auswirkt. In diesem Zusammenhang ist auch zu beachten, dass die Kanten und Seitenflächen der Stege 2b im Bereich der Randzonen 2e in der Praxis weitaus unpräziser ausgeführt sind und die Kanten der Stege 2b durch die hohe spezifische Flächenbelastung unkontrollierbar deformiert und im Laufe der Zeit mehr und mehr verschleißen.

Um diese Nachteile zu beseitigen wird erfindungsgemäß vorgeschlagen und wie in der unteren Hälfte der Figur 1 sowie in Figur 3 dargestellt, dass die Radien des äußeren Kegels, in diesem Fall sind dies die Radien der kegelförmigen Bohrung 2a der Hülse 2, stets gleich oder größer den Radien des inneren Kegels, in diesem Fall sind es die Radien der kegelförmigen, äußeren Mantelfläche 1a der Aufnahme 1, ausgeführt werden.

Damit wird eine Verlagerung des Kraftschlusses auf die Randzonen 2e der Stege 2b vermieden und ein direkter Kraftschluss zwischen Aufnahme 1 und der Hülse 2 über ihre Stege 2a zum Werkstück 3 gewährleistet sowie bei einer konzentrischen Endbearbeitung, das bedeutet einer Endbearbeitung des zylindrischen Außendurchmessers 2c der Hülse 2 mit der kegelförmigen Bohrung 2a der Hülse 2 in einer Aufspannung, eine nahezu 100-prozentige Koaxialität zwischen der Aufnahme 1 und der Bohrung 3a des Werkstücks 3 erzielt.

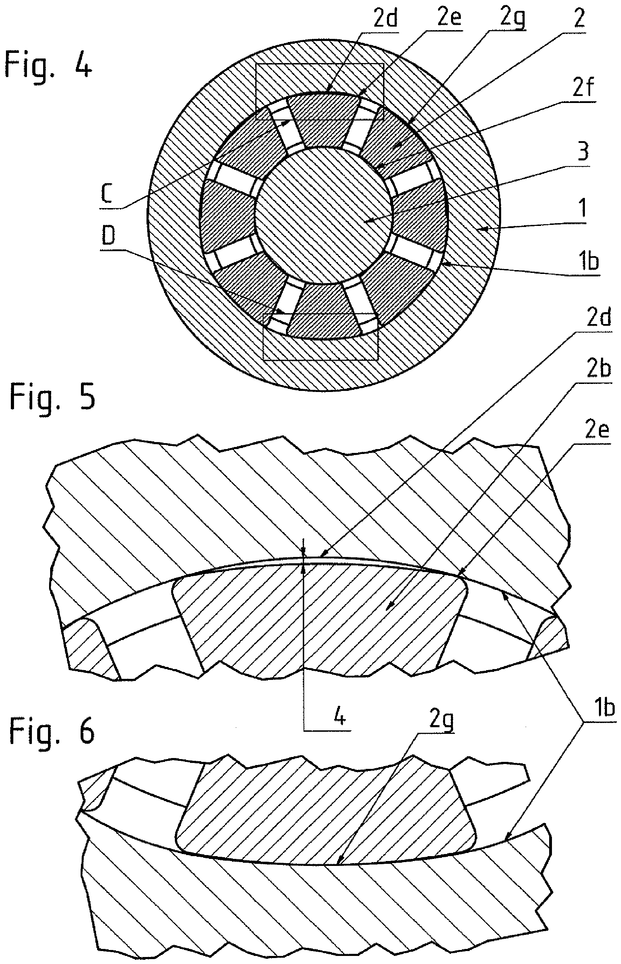

Die Figur 4 zeigt eine ähnliche Kegelverbindung bestehend aus einer Aufnahme 1 und einer Hülse 2, die in diesem Fall eine zylindrische Bohrung 2f aufweist, in der sich das zu spannende Werkstück 3 befindet. Auch hier wird während des Spannvorgangs die Hülse 2 und die Aufnahme 1 axial zueinander verschoben, so dass nun die Hülse 2 soweit zusammengedrückt wird bis es zum Kraftschluss zwischen der Aufnahme 1, der Hülse 2 und dem Werkstück 3 kommt. Wie in der oberen Hälfte der Figur 4 und vergrößert in Figur 5 dargestellt, kommt es ebenso zu einer Kraftschlussverlagerung vom Zentrum 2d der Stege 2b zu deren Randzonen 2e mit den bereits geschilderten Nachteilen. In ähnlicher Weise wie bei der Beschreibung der Figuren 1, 2 und 3 erwähnt, können auch hier die auftretenden Nachteile behoben werden, indem die Radien des äußeren Kegels, dies sind in diesem Fall die Radien der kegelförmigen Bohrung 1b der Aufnahme 1, stets gleich oder größer den Radien des inneren Kegels, in diesem Fall sind es die Radien der kegelförmigen, äußeren Mantelfläche 2g der Hülse 2, ausgeführt werden.

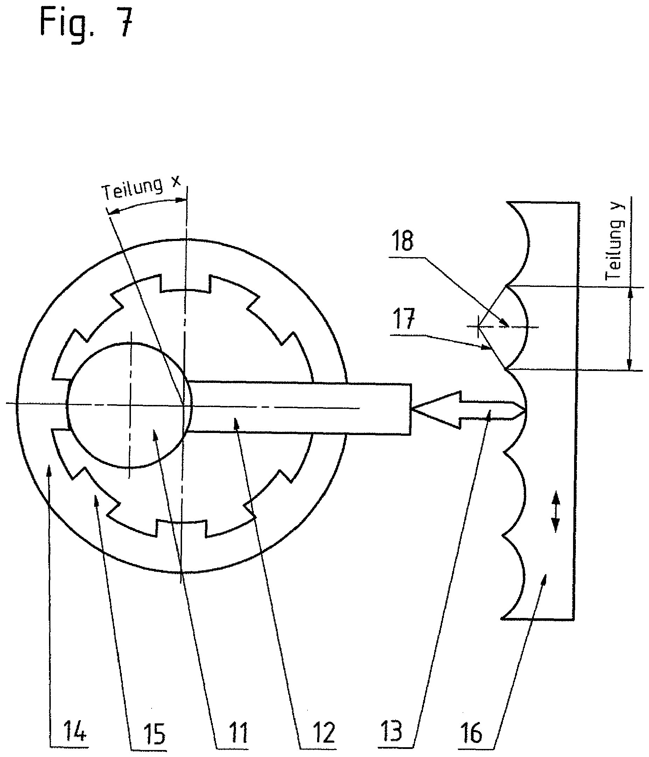

Um diese vorerwähnte Radiusvergrößerung ausführen zu können, wird erfindungsgemäß vorgeschlagen, eine für die Endbearbeitung vorgesehene Werkzeugmaschine so herzurichten, dass sie dem in Figur 7 dargestellten prinzipiellen Aufbau entspricht. Die Figur 7 zeigt in vereinfachter Darstellung eine Vorrichtung zum Ausschleifen der entsprechenden kegelförmigen Bohrungen. Die Schleifscheibe 11 mit ihrer Lagerung 12 wird über die nur schematisch dargestellte Zustellung 13 an die Wandung der zu bearbeitenden Bohrung geführt. In Figur 7 sind die Aufnahme 1 bzw. die Hülse 2 als ringförmiger Körper 14 mit nach innen gerichteten Stegen 15 dargestellt.

Die Zustellung 13 kann sowohl rein softwaremäßig als auch softwaremäßig mit separatem Stellorgan oder rein mechanisch erfolgen. In allen Fällen muss die Zustellung 13 synchron sowie positionsorientiert zur Werkstückdrehzahl und Stegfolge verlaufen. Das heißt die Teilungen x und y müssen aufeinander abgestimmt und zeitlich gleich lang sein.

Bei einer rein softwaremäßigen Zustellung 13 erfolgt die Ansteuerung über ein synchron auf die Werkstückdrehzahl und Stegfolge ausgerichtetes Signal an die Maschinensteuerung.

Es hat sich gezeigt, dass bei einem ringförmigen Körper 14 mit acht Stegen 15 und einer in Figur 7 schematisch dargestellten sinusförmigen Ansteuerung 16, über einen Winkel 17 von +/- 60° bei einem Radius 18 von 50 µm eine vom Bohrungsdurchmesser nahezu unabhängige Radiusvergrößerung von 0,3 mm erzielbar ist. Das heißt, dass sich eine solche Keilverbindung bis zu 0,6 mm aufweiten lässt, ohne dass es zur Bildung des vorerwähnten Spaltes 4 zwischen den sich berührenden kegelförmigen Flächen kommen kann.

Bei einer softwaremäßigen Zustellung 13 mit separatem Stellorgan wird dieses direkt mit der Lagerung 12 der Schleifscheibe 11 verbunden auf den Schleifspindelstock montiert. Das beispielweise als Piezoaktor ausgeführte Stellorgan wird dabei ebenfalls synchron zur Werkstückdrehzahl und Stegfolge angesteuert, so dass es die Schleifscheibe 11 rhythmisch zur Stegfolge zustellt. Bei dieser Art der Zustellung besteht auch die Möglichkeit den Stellweg durch einen Festanschlag im Bereich des Sinus-Nulldurchgangs zu begrenzen.

Bei einer rein mechanischen Zustellung 13 ist das Stellorgan ebenfalls direkt mit der Lagerung 12 der Schleifscheibe 11 verbunden auf dem Schleifspindelstock montiert, jedoch ist der Antrieb des Stellorgans hierbei direkt mit dem Werkstückantrieb gekoppelt, so dass die mechanische Zustellung, beispielweise über Hebel, Nocken oder dergleichen ebenfalls synchron zur Werkstückdrehzahl und Stegfolge erfolgt.

### Bezugszeichenliste

- 1: Aufnahme
1a kegelförmige, äußere Mantelfläche der Aufnahme
1b kegelförmige Bohrung der Aufnahme
- 2: Hülse
2a kegelförmige Bohrung der Hülse
2b Steg der Hülse
2c zylindrischer Außendurchmesser der Hülse
2d Zentrum des Stegs der Hülse
2e Randzone des Stegs der Hülse
2f zylindrische Bohrung der Hülse
2g kegelförmige, äußere Mantelfläche der Hülse
b Stegbreite
- 3: Werkstück
3a Bohrung des Werkstücks
- 4: Spalt
- 11: Schleifscheibe
- 12: Lagerung
- 13: Zustellung
- 14: ringförmiger Körper
- 15: nach innen gerichtete Stege
- 16: sinusförmige Ansteuerung
- 17: Winkel
- 18: Radius
- X und y: Teilung

## Patentansprüche

1. Verfahren zur Verbesserung der Koaxilität und Belastbarkeit einer aus einer Aufnahme und einer aufweit- bzw. zusammendrückbaren Hülse umfassenden Kegelverbindung, wobei die Radien eines äußeren Kegels stets gleich oder größer den Radien eines inneren Kegels ausgeführt werden.

2. Verfahren nach Anspruch 1, bei dem der äußere Kegel auf einer Werkzeugmaschine, insbesondere einem Schleifgerät, vorzugsweise einer Innenschleifeinrichtung bearbeitet wird, deren radiale Zustellung (13) von einer synchron zur Werkstückdrehzahl und Stegfolge verlaufende Zusatzbewegung überlagert ist.

3. Verfahren nach Anspruch 2, wobei die Zusatzbewegung einen sinusförmigen Verlauf aufweist, deren Amplitude über den Radius (17) und den in Anspruch genommenen Winkel (18) des Grundkreises variierbar ist.

4. Verfahren nach Anspruch 2 oder 3, wobei die Zusatzbewegung als Stellsignal an die Maschinensteuerung übertragen wird.

5. Verfahren nach wenigstens einem der Ansprüche 2 bis 4, wobei die Zusatzbewegung über einen separaten, direkt mit der Werkzeugmaschine, insbesondere einem Schleifgerät, gekoppelten Stellantrieb übertragen wird, der fest mit der radialen Zustellung des Schleifgeräts verbundenen ist.

6. Vorrichtung zur Durchführung des Verfahrens nach Anspruch 1 bis 5 umfassend eine Werkzeugmaschine, insbesondere ein Schleifgerät und einen Stellantrieb, **dadurch gekennzeichnet,**
**dass** der Stellantrieb, insbesondere ein separater Stellantrieb, als Piezoaktor ausgeführt und über seine Ansteuerung synchron mit der Maschinensteuerung verbunden ist.

7. Vorrichtung zur Durchführung des Verfahrens nach Anspruch 1 bis 5 umfassend eine Werkzeugmaschine, insbesondere ein Schleifgerät, und einen Stellantrieb **dadurch gekennzeichnet,**
**dass** der Stellantrieb, insbesondere separate Stellantrieb, als mechanischer mit dem Werkstückantrieb gekoppelter Mechanismus ausgeführt ist.
